# EUROPEAN PATENT APPLICATION

(11) **EP 4 773 482 A1**
(43) Date of publication of application: **08.07.2026**
(21) Application number: 24869918.3
(22) Date of filing: 28.06.2024
(51) Int. Cl.: H02K 9/19

(54) **MOTOR COOLING CONTROL METHOD AND APPARATUS, DEVICE, AND STORAGE MEDIUM**

(30) Priority: 28.09.2023 CN 202311293432
(71) Applicant: Dongfeng Motor Group Co., Ltd., Wuhan, Hubei 430056 (CN)
(72) Inventor: KE, Menglong, Wuhan, Hubei 430056 (CN); YU, Jiajia, Wuhan, Hubei 430056 (CN); XU, Jing, Wuhan, Hubei 430056 (CN); ZHU, Zhe, Wuhan, Hubei 430056 (CN); GAO, Wei, Wuhan, Hubei 430056 (CN)
(74) Representative: Gille Hrabal Partnerschaftsgesellschaft mbB Patentanwälte
(86) International application number: PCT/CN2024/102167
(87) International publication number: WO 2025/066359

(57) **Abstract**

The present application discloses a motor cooling control method and apparatus, a device, and a storage medium. The method comprises: on the basis of the torque of a motor and the rotation speed of the motor, determining target heat dissipation power; on the basis of a current oil-water temperature difference and the target heat dissipation power, determining a contour line corresponding to the target heat dissipation power, the contour line being used for representing the target heat dissipation power at different oil flow rates and different water flow rates; on the basis of the contour line, determining an amount of change in the water flow rate corresponding to a current oil flow rate and an amount of change in the oil flow rate corresponding to a current water flow rate; on the basis of the smaller of the amount of change in the water flow rate and the amount of change in the oil flow rate, determining a target oil flow rate and a target water flow rate; and on the basis of the target oil flow rate, controlling the rotation speed or the duty ratio of an electronic oil pump, and on the basis of the target water flow rate, controlling the rotation speed or the duty ratio of an electronic water pump. By means of the above solution, the oil-water temperature difference, the oil flow rate, and the water flow rate can be finely controlled, so that the heat dissipation power meets the cooling requirements of the motor, and precise heat dissipation according to requirements is achieved, thereby reducing the power consumption of an electric driving system and an entire vehicle.

## Description

### Field of the Invention

The present application relates to the field of vehicle control technology, and in particular to a motor cooling control method, apparatus, device and storage medium.

### Background of the Invention

In hybrid electric vehicles and pure electric vehicles, the heat in the electric drive cooling oil is usually transferred to the cooling water through an oil-water heat exchanger, and then dissipated into the air through the heat dissipation components of the heat exchanger, thereby cooling the cooling oil. The basic characteristics of the heat exchanger are that, under a constant specific heat of the heat exchanger, the greater the temperature difference between the oil and water, the greater the heat dissipation power, that is, the stronger the heat dissipation capability; and under a given oil-water temperature difference, the greater the oil flow rate and/or the water flow rate, the greater the heat dissipation power. Therefore, in addition to the specific heat characteristics of the heat exchanger itself, the main factors affecting the heat dissipation power of the heat exchanger are the oil-water temperature difference, the oil flow rate, and the water flow rate.

How to precisely control the oil-water temperature difference, the oil flow rate, and the water flow rate so that the heat dissipation power of the heat exchanger meets the cooling requirements of the motor and achieves precise, demand-based heat dissipation is a problem that urgently needs to be solved.

### Summary of the Invention

The embodiments of the present application provide a motor cooling control method, apparatus, device and storage medium, which can precisely control the oil-water temperature difference, the oil flow rate, and the water flow rate, so that the heat dissipation power of the heat exchanger meets the cooling requirements of the motor, achieving precise, demand-based heat dissipation, thereby reducing the power consumption of the electric drive system and the whole vehicle.

Other features and advantages of the present application will become apparent from the following detailed description, or can be partially learned through practice of the present application.

According to a first aspect of embodiments of the present application, a motor cooling control method is provided, comprising the following steps:
determining a target heat dissipation power according to a motor torque and a motor rotational speed;
determining a contour line corresponding to the target heat dissipation power according to a current oil-water temperature difference and the target heat dissipation power, wherein the contour line is configured to represent the target heat dissipation powers under different oil flow rates and different water flow rates;
determining an amount of change in the water flow rate corresponding to a current oil flow rate and an amount of change in the oil flow rate corresponding to a current water flow rate according to the contour line;
determining a target oil flow rate and a target water flow rate according to the smaller of the amount of change in the water flow rate and the amount of change in the oil flow rate; and
controlling a rotational speed or a duty ratio of an electronic oil pump according to the target oil flow rate, and controlling a rotational speed or a duty ratio of an electronic water pump according to the target water flow rate.

In some embodiments of the present application, based on the above solution, the step of determining a contour line corresponding to the target heat dissipation power according to a current oil-water temperature difference and the target heat dissipation power comprises:
determining a first distribution diagram corresponding to the current oil-water temperature difference, wherein the first distribution diagram is configured to represent heat dissipation powers under different oil flow rates and different water flow rates; and
performing interpolation between the heat dissipation powers in the first distribution diagram and the target heat dissipation power to obtain the contour line corresponding to the target heat dissipation power.

In some embodiments of the present application, based on the above solution, the step of determining a first distribution diagram corresponding to the current oil-water temperature difference comprises:
acquiring a second distribution diagram, wherein the second distribution diagram comprises a plurality of first distribution diagrams corresponding to preset oil-water temperature differences; and
when the current oil-water temperature difference is greater than a current preset oil-water temperature difference, determining the first distribution diagram corresponding to a next preset oil-water temperature difference as the first distribution diagram corresponding to the current oil-water temperature difference.

In some embodiments of the present application, based on the above solution, the step of determining an amount of change in the water flow rate corresponding to a current oil flow rate and an amount of change in the oil flow rate corresponding to a current water flow rate according to the contour line comprises:
determining the water flow rate corresponding to the current oil flow rate and the oil flow rate corresponding to the current water flow rate according to the contour line;
determining the amount of change in the water flow rate as a difference between the water flow rate corresponding to the current oil flow rate and the current water flow rate; and
determining the amount of change in the oil flow rate as a difference between the oil flow rate corresponding to the current water flow rate and the current oil flow rate.

In some embodiments of the present application, based on the above solution, the step of determining a target oil flow rate and a target water flow rate according to the smaller of the amount of change in the water flow rate and the amount of change in the oil flow rate comprises:
when the amount of change in the oil flow rate is less than or equal to the amount of change in the water flow rate, determining the current water flow rate as the target water flow rate, and determining a sum of the amount of change in the oil flow rate and the current oil flow rate as the target oil flow rate; and
when the amount of change in the oil flow rate is greater than the amount of change in the water flow rate, determining the current oil flow rate as the target oil flow rate, and determining a sum of the amount of change in the water flow rate and the current water flow rate as the target water flow rate.

In some embodiments of the present application, based on the above solution, the step of determining a target heat dissipation power according to a motor torque and a motor rotational speed comprises:
looking up the target heat dissipation power in a preset mapping table according to the motor torque and the motor rotational speed, wherein the preset mapping table is configured to represent a correspondence between the motor torque, the motor rotational speed, and the target heat dissipation power.

In some embodiments of the present application, based on the above solution, the step of controlling a rotational speed or a duty ratio of an electronic oil pump according to the target oil flow rate comprises:
determining a target rotational speed of the electronic oil pump according to the target oil flow rate and a displacement of the electronic oil pump, and controlling the electronic oil pump to operate at the target rotational speed; or
determining a target duty ratio of the electronic oil pump from a duty ratio-flow rate relationship table of the electronic oil pump according to the target oil flow rate, and controlling the electronic oil pump to operate at the target duty ratio.

According to a second aspect of embodiments of the present application, a motor cooling control apparatus is provided, comprising:
a target heat dissipation power determination unit, which is configured to determine a target heat dissipation power according to a motor torque and a motor rotational speed;
a contour line determination unit, which is configured to determine a contour line corresponding to the target heat dissipation power according to a current oil-water temperature difference and the target heat dissipation power, wherein the contour line is configured to represent the target heat dissipation powers under different oil flow rates and different water flow rates;
a flow rate change determination unit, which is configured to determine an amount of change in the water flow rate corresponding to a current oil flow rate and an amount of change in the oil flow rate corresponding to a current water flow rate according to the contour line;
a target flow rate determination unit, which is configured to determine a target oil flow rate and a target water flow rate according to the smaller of the amount of change in the water flow rate and the amount of change in the oil flow rate; and
a flow rate control unit, which is configured to control a rotational speed or a duty ratio of an electronic oil pump according to the target oil flow rate, and control a rotational speed or a duty ratio of an electronic water pump according to the target water flow rate.

According to a third aspect of the embodiments of the present application, a motor cooling control device is provided, and comprises a processor and a memory, wherein the memory stores computer program instructions executable by the processor, and when the processor executes the computer program instructions, the processor implements the steps of the method according to any one of the solutions of the first aspect described above.

According to a fourth aspect of embodiments of the present application, a computer-readable storage medium is provided, the computer-readable storage medium stores computer program instructions, and when the computer program instructions are executed by a processor, the processor implements the steps of the method according to any one of the solutions of the first aspect described above.

In the present application, a target heat dissipation power is determined according to a motor torque and a motor rotational speed; a contour line corresponding to the target heat dissipation power is determined according to a current oil-water temperature difference and the target heat dissipation power, wherein the contour line is configured to represent the target heat dissipation powers under different oil flow rates and different water flow rates; an amount of change in the water flow rate corresponding to a current oil flow rate and an amount of change in the oil flow rate corresponding to a current water flow rate are determined according to the contour line; a target oil flow rate and a target water flow rate are determined according to the smaller of the amount of change in the water flow rate and the amount of change in the oil flow rate; and a rotational speed or a duty ratio of an electronic oil pump is controlled according to the target oil flow rate, and a rotational speed or a duty ratio of an electronic water pump is controlled according to the target water flow rate. Through the above solution, the oil-water temperature difference, the oil flow rate, and the water flow rate can be precisely controlled, so that the heat dissipation power meets the cooling requirements of the motor, achieving precise demand-based heat dissipation, thereby reducing power consumption of the electric drive system and the vehicle as a whole.

It should be understood that the foregoing general description and the following detailed description are merely exemplary and explanatory, and do not limit the present application.

### Brief Description of the Drawings

The drawings are incorporated into the specification and form a part thereof, illustrating embodiments in accordance with the present application and being used together with the specification to explain the principles of the present application. It is obvious that the drawings in the following description are only a part of embodiments of the present application, for those of ordinary skill in the art, other drawings may also be obtained based on these drawings without any inventive effort. In the figures:
Fig. 1 illustrates a schematic diagram of a principle of a motor cooling control method in an embodiment of the present application;
Fig. 2 illustrates a flowchart of a motor cooling control method in an embodiment of the present application;
Fig. 3 illustrates a schematic diagram of a second distribution diagram in an embodiment of the present application;
Fig. 4 illustrates a schematic diagram of a contour line in an embodiment of the present application;
Fig. 5 illustrates a block diagram of a motor cooling control apparatus in an embodiment of the present application;
Fig. 6 illustrates a structural diagram of a motor cooling control device in an embodiment of the present application.

### Detailed Description of the Embodiments

In the following, the technical solutions in the embodiments of the present application will be described clearly and completely in combination with the drawings in the embodiments of the present application. Obviously, the described embodiments are only a part of the embodiments of the present application, not all of the embodiments. Based on the embodiments in the present application, all other embodiments obtained by those of ordinary skill in the art without inventive efforts shall fall within the protection scope of the present application.

In addition, the described features, structures, or characteristics can be combined in any suitable manner in one or more embodiments. In the following description, numerous specific details are provided in order to give a full understanding of the embodiments of the present application. However, those skilled in the art will realize that the technical solutions of the present application can be practiced without one or more of the specific details, or other methods, components, apparatus, steps, etc. can be adopted. In other cases, well-known methods, apparatus, implementations, or operations are not described in detail so as to avoid obscuring aspects of the present application.

The block diagrams shown in the drawings merely represent functional entities and do not necessarily correspond to physically independent entities. That is, the functional entities can be implemented in software form, or can be implemented in one or more hardware modules or integrated circuits, or can be implemented in different networks and/or processor devices and/or microcontroller devices.

The flowcharts shown in the drawings are illustrative only, and do not necessarily comprise all contents and operations/steps, nor must they be executed in the order described. For example, some operations/steps can be further decomposed, and some operations/steps can be combined or partially combined. Therefore, the actual order of execution may change according to actual conditions.

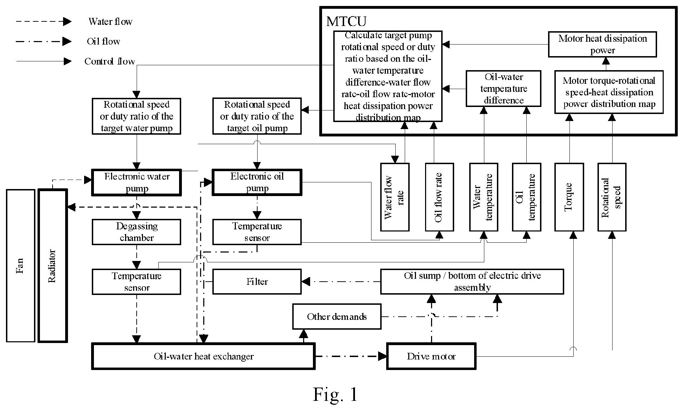

To enable those skilled in the art to better understand the present application, a working principle of the motor cooling control system involved in the present application is first briefly described with reference to Fig. 1.

Referring to Fig. 1, a schematic diagram of a principle of a motor cooling control method in the embodiment of the present application is shown. As shown in the schematic diagram of the principle in Fig. 1, the system is divided into a water flow circulation, an oil flow circulation, and a control flow.

Cooling water passes through an electronic water pump, a deaeration chamber, an oil-water heat exchanger, and a radiator (for example, fan air cooling), and then returns to the electronic water pump to form the water flow circulation, and a temperature sensor is provided in the water flow circulation for monitoring a water temperature.

Cooling oil of the motor passes through an oil sump, a filter, an electronic oil pump, the oil-water heat exchanger, a drive motor, and then returns to the oil sump to form the oil flow circulation, and a temperature sensor is provided in the oil flow circulation for monitoring an oil temperature. A portion of the oil further passes through a branch oil circuit to meet other requirements (for example, bearing lubrication) and then returns to the oil sump.

In the control flow, a motor and transmission control unit (MTCU) collects information such as a water flow rate, an oil flow rate, a water temperature, an oil temperature, a torque, and a rotational speed. According to the torque and the rotational speed, a motor torque-rotational speed-thermal power consumption distribution diagram can be consulted to obtain a motor thermal power consumption, namely the target heat dissipation power. According to the water flow rate, the oil flow rate, the water temperature, and the oil temperature, an oil-water temperature difference-oil flow rate-water flow rate-heat dissipation power distribution diagram can be consulted to obtain a target rotational speed or a target duty ratio of the electronic water pump and the electronic oil pump. Finally, the electronic water pump and the electronic oil pump are controlled to operate at the target rotational speed or the target duty ratio.

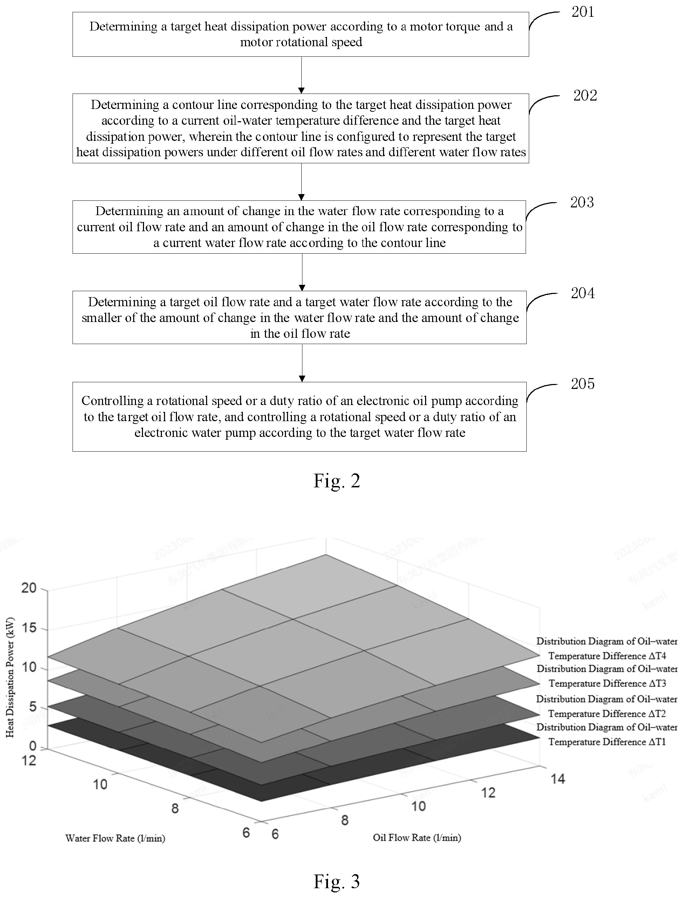

As shown in Fig. 2, a motor cooling control method is provided. The method is illustrated through applying it to the MTCU shown in Fig. 1, and can comprises S201 to S205.

In S201, a target heat dissipation power is determined according to a motor torque and a motor rotational speed.

It should be understood that, in hybrid electric drive systems and pure electric drive systems, the temperature of the cooling oil must be reduced through an oil-water heat exchanger; therefore, the target heat dissipation power refers to the target heat dissipation power of the oil-water heat exchanger.

In practice, a plurality of methods can be adopted to determine the target heat dissipation power.

In some embodiments, the target heat dissipation power can be obtained through consulting a preset mapping table according to the motor torque and the motor rotational speed, and the preset mapping table is configured to represent a correspondence between the motor torque, the motor rotational speed, and the target heat dissipation power.

In other embodiments, the target heat dissipation power can also be obtained through calculation. Specifically, a motor operating efficiency (the motor operating efficiency is a percentage less than 100%) under the motor rotational speed and motor torque, as well as voltage and current data under the motor rotational speed and motor torque, can be obtained, when the motor is driving, the product of the voltage and current is regarded as the input electrical power, and then the input electrical power minus the product of the input electrical power and the motor operating efficiency (i.e., the output mechanical work power) is calculated to obtain the motor power consumption, which corresponds to the target heat dissipation power; and when the motor is generating, the input mechanical power is calculated through multiplying the motor torque by the motor rotational speed and then dividing by 9550, and then the input mechanical power minus the product of the input mechanical power and the motor operating efficiency (i.e., the output generated power) is calculated to obtain the motor power consumption, which corresponds to the target heat dissipation power.

In S202, a contour line corresponding to the target heat dissipation power is determined according to a current oil-water temperature difference and the target heat dissipation power, and the contour line is configured to represent the target heat dissipation powers under different oil flow rates and different water flow rates.

It should be understood that the current oil temperature and the current water temperature can be measured through a temperature sensor, and the current oil-water temperature difference can be obtained through subtracting the current water temperature from the current oil temperature.

In practice, a first distribution diagram corresponding to the current oil-water temperature difference is determined, and the first distribution diagram is configured to represent heat dissipation powers under different oil flow rates and different water flow rates; and the heat dissipation powers in the first distribution diagram is interpolated with the target heat dissipation power to obtain the contour line corresponding to the target heat dissipation power.

The first distribution diagram can be an oil-water temperature difference-oil flow rate-water flow rate-heat dissipation power distribution diagram, and the first distribution diagram corresponding to the current oil-water temperature difference can be obtained through the following steps: acquiring a second distribution diagram, wherein the second distribution diagram comprises a plurality of first distribution diagrams corresponding to preset oil-water temperature differences; and when the current oil-water temperature difference is greater than a current preset oil-water temperature difference, determining the first distribution diagram corresponding to a next preset oil-water temperature difference as the first distribution diagram corresponding to the current oil-water temperature difference.

Fig. 3 illustrates a schematic diagram of a second distribution diagram in one embodiment. As shown in Fig. 3, the second distribution diagram comprises a first distribution diagram for an oil-water temperature difference of Δ T1, a first distribution diagram for an oil-water temperature difference of Δ T2, a first distribution diagram for an oil-water temperature difference of Δ T3, and a first distribution diagram for an oil-water temperature difference of Δ T4. Each first distribution diagram comprises heat dissipation powers under the corresponding oil-water temperature difference when the oil flow rate ranges from 6 to 14 L/min and the water flow rate ranges from 6 to 12 L/min. It can be seen from Fig. 3 that, under the same flow rate conditions, the greater oil-water temperature difference results in the higher heat dissipation power; and under the same oil-water temperature difference, the greater oil flow rate and/or water flow rate results in the higher heat dissipation power.

When the first distribution diagram is selected according to the current oil-water temperature difference, if the current oil-water temperature difference is greater than the current preset oil-water temperature difference (for example, ΔTi, i = 1, 2, 3, ...), the first distribution diagram corresponding to ΔTi+1 can be selected; otherwise, the first distribution diagram corresponding to ΔTi can be selected.

It should be noted that, in the second distribution diagram, the smaller the interval between preset oil-water temperature differences, i.e., the smaller the interval between ΔTi and ΔTi+1, the higher the control accuracy and the lower the power consumption.

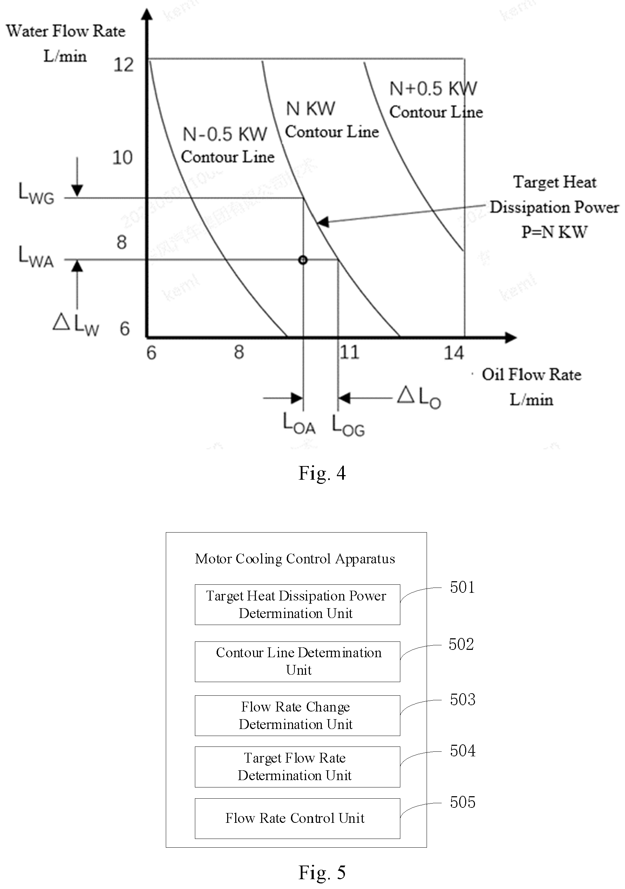

Fig. 4 illustrates a schematic diagram of a contour line in one embodiment. After the first distribution diagram corresponding to the current oil-water temperature difference is selected, the heat dissipation powers under different oil flow rates and different water flow rates can be obtained. These heat dissipation powers are interpolated with the target heat dissipation power so as to obtain the contour line corresponding to the target heat dissipation power, such as the contour line for a target heat dissipation power of P = N KW shown in Fig. 4.

In S203, an amount of change in the water flow rate corresponding to a current oil flow rate and an amount of change in the oil flow rate corresponding to a current water flow rate are determined according to the contour line.

In practice, the water flow rate corresponding to the current oil flow rate and the oil flow rate corresponding to the current water flow rate can be determined according to the contour line; a difference between the water flow rate corresponding to the current oil flow rate and the current water flow rate is determined as the amount of change in the water flow rate; and a difference between the oil flow rate corresponding to the current water flow rate and the current oil flow rate is determined as the amount of change in the oil flow rate.

With continued reference to Fig. 4, assuming that the current oil flow rate is L_{OA} and the current water flow rate is L_{WA}, when the current oil flow rate L_{OA} remains unchanged, the water flow rate is increased to the contour line, resulting in a water flow rate of L_{WG}, and the amount of change in the water flow rate is ΔL_{W}; and when the current water flow rate L_{WA} remains unchanged, the oil flow rate is increased to the contour line, resulting in an oil flow rate of L_{OG}, and the amount of change in the oil flow rate is ΔL_{O}.

In S204, a target oil flow rate and a target water flow rate are determined according to the smaller of the amount of change in the water flow rate and the amount of change in the oil flow rate.

In some embodiments, when the amount of change in the oil flow rate is less than or equal to the amount of change in the water flow rate, the current water flow rate is determined as the target water flow rate, and the sum of the amount of change in the oil flow rate and the current oil flow rate is determined as the target oil flow rate; and when the amount of change in the oil flow rate is greater than the amount of change in the water flow rate, the current oil flow rate is determined as the target oil flow rate, and the sum of the amount of change in the water flow rate and the current water flow rate is determined as the target water flow rate.

It can be understood that, when the amount of change in the oil flow rate ΔL_{O} is less than or equal to the amount of change in the water flow rateΔL_{W}, the target water flow rate is the current water flow rate L_{WA}, and the target oil flow rate is the increased oil flow rate L_{OG}; otherwise, the target water flow rate is the increased water flow rate L_{WG}, and the target oil flow rate is the current oil flow rate L_{OA}.

It should be emphasized that, through increasing only the flow rate of the pump requiring a smaller increase, the total additional flow rate of the electronic oil pump and the electronic water pump is minimized, thereby minimizing power consumption.

In 205, a rotational speed or a duty ratio of an electronic oil pump is controlled according to the target oil flow rate, and a rotational speed or a duty ratio of an electronic water pump is controlled according to the target water flow rate.

In practice, a target rotational speed of the electronic oil pump can be determined according to the target oil flow rate and the displacement of the electronic oil pump, and the electronic oil pump is controlled to operate at the target rotational speed; or a target duty ratio of the electronic oil pump can be determined from a duty ratio-flow rate relationship table of the electronic oil pump according to the target oil flow rate, and the electronic oil pump is controlled to operate at the target duty ratio.

Similarly, a target rotational speed of the electronic water pump can be determined according to the target water flow rate and the displacement of the electronic water pump, and the electronic water pump is controlled to operate at the target rotational speed; or a target duty ratio of the electronic water pump can be determined from a duty ratio-flow rate relationship table of the electronic water pump according to the target water flow rate, and the electronic water pump is controlled to operate at the target duty ratio.

In the embodiments of the present application, a target heat dissipation power is determined according to a motor torque and a motor rotational speed; a contour line corresponding to the target heat dissipation power is determined according to a current oil-water temperature difference and the target heat dissipation power, wherein the contour line is configured to represent the target heat dissipation powers under different oil flow rates and different water flow rates; an amount of change in the water flow rate corresponding to a current oil flow rate and an amount of change in the oil flow rate corresponding to a current water flow rate are determined according to the contour line; a target oil flow rate and a target water flow rate are determined according to the smaller of the amount of change in the water flow rate and the amount of change in the oil flow rate; and a rotational speed or a duty ratio of an electronic oil pump is controlled according to the target oil flow rate, and a rotational speed or a duty ratio of an electronic water pump is controlled according to the target water flow rate. Through the above solution, the oil-water temperature difference, the oil flow rate, and the water flow rate can be precisely controlled, so that the heat dissipation power meets the cooling requirements of the motor, achieving precise demand-based heat dissipation, thereby reducing power consumption of the electric drive system and the vehicle as a whole.

The following describes apparatus embodiments of the present application, which can be adopted to implement the motor cooling control method in the above embodiments of the present application. For details not disclosed in the apparatus embodiments of the present application, reference can be made to the embodiments of the motor cooling control method described above.

Referring to Fig. 5, a block diagram of a motor cooling control apparatus in the embodiment of the present application is shown.

As shown in Fig. 5, the motor cooling control apparatus in the embodiment of the present application comprises: a target heat dissipation power determination unit 501, which is configured to determine a target heat dissipation power according to a motor torque and a motor rotational speed; a contour line determination unit 502, which is configured to determine a contour line corresponding to the target heat dissipation power according to a current oil-water temperature difference and the target heat dissipation power, wherein the contour line is configured to represent the target heat dissipation powers under different oil flow rates and different water flow rates; a flow rate change determination unit 503, which is configured to determine an amount of change in the water flow rate corresponding to a current oil flow rate and an amount of change in the oil flow rate corresponding to a current water flow rate according to the contour line; a target flow rate determination unit 504, which is configured to determine a target oil flow rate and a target water flow rate according to the smaller of the amount of change in the water flow rate and the amount of change in the oil flow rate; and a flow rate control unit 505, which is configured to control a rotational speed or a duty ratio of an electronic oil pump according to the target oil flow rate, and control a rotational speed or a duty ratio of an electronic water pump according to the target water flow rate.

In some embodiments of the present application, based on the foregoing solution, the contour line determination unit 502 is further configured to determine a first distribution diagram corresponding to the current oil-water temperature difference, and the first distribution diagram is configured to represent heat dissipation powers under different oil flow rates and different water flow rates; and interpolate the heat dissipation powers in the first distribution diagram with the target heat dissipation power to obtain the contour line corresponding to the target heat dissipation power.

In some embodiments of the present application, based on the foregoing solution, the contour line determination unit 502 is further configured to acquire a second distribution diagram, and the second distribution diagram comprises a plurality of first distribution diagrams corresponding to preset oil-water temperature differences; and when the current oil-water temperature difference is greater than the current preset oil-water temperature difference, determine the first distribution diagram corresponding to the next preset oil-water temperature difference as the first distribution diagram corresponding to the current oil-water temperature difference.

In some embodiments of the present application, based on the foregoing solution, the flow rate change determination unit 503 is further configured to determine the water flow corresponding to the current oil flow rate and the oil flow corresponding to the current water flow rate according to the contour line; and determine the difference between the water flow rate corresponding to the current oil flow rate and the current water flow rate as the amount of change in the water flow rate; and determine the difference between the oil flow rate corresponding to the current water flow rate and the current oil flow rate as the amount of change in the oil flow rate.

In some embodiments of the present application, based on the foregoing solution, the target flow rate determination unit 504 is further configured to determine the current water flow rate as the target water flow rate and determine the sum of the amount of change in the oil flow rate and the current oil flow rate as the target oil flow rate when the amount of change in the oil flow rate is less than or equal to the amount of change in the water flow rate; and determine the current oil flow rate as the target oil flow rate and determine the sum of the amount of change in the water flow rate and the current water flow rate as the target water flow rate when the amount of change in the oil flow rate is greater than the amount of change in the water flow rate.

In some embodiments of the present application, based on the foregoing solution, the target heat dissipation power determination unit 501 is further configured to look up the target heat dissipation power in a preset mapping table according to the motor torque and motor rotational speed, and the preset mapping table is configured to represent the correspondence between the motor torque, the motor rotational speed, and the target heat dissipation power.

In some embodiments of the present application, based on the foregoing solution, the flow rate control unit 505 is further configured to determine the target rotational speed of the electronic oil pump according to the target oil flow rate and the displacement of the electronic oil pump, and control the electronic oil pump to operate at the target rotational speed; or determine the target duty ratio of the electronic oil pump from the duty ratio-flow rate relationship table of the electronic oil pump according to the target oil flow rate, and control the electronic oil pump to operate at the target duty ratio.

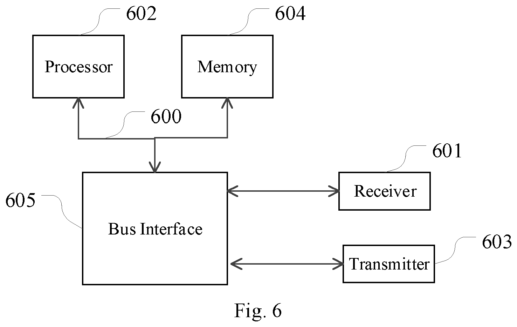

Based on the same inventive concept, the embodiment of the present application further provides a motor cooling control device. Referring to Fig. 6, a structural diagram of a motor cooling control device in the embodiments of the present application is shown. The motor cooling control device comprises one or more processors 602, one or more memories 604, and at least one computer program (computer program instruction) stored on the memory 604 and executable on the processor 602, and when the processor 602 executes the computer program, the method as described above is implemented.

In Fig. 6, a bus architecture (represented by a bus 600) is provided, and the bus 600 can comprise any number of interconnected buses and bridges, linking together various circuits of one or more processors represented by the processor 602 and memories represented by the memory 604. The bus 600 can further link various other circuits, such as peripheral devices, voltage regulators, and power management circuits, which are well known in the art, and thus will not be described in further detail herein. A bus interface 605 provides an interface between the bus 600and a receiver 601 and a transmitter 603. The receiver 601 and the transmitter 603 can be the same component, namely a transceiver, providing units for communication with various other devices over a transmission medium. The processor 602 is responsible for managing the bus 600 and perform general processing, while the memory 604 can be configured to store data utilized by the processor 602 during execution of operations.

Based on the same inventive concept, the embodiment of the present application provides a computer-readable storage medium, the computer-readable storage medium stores computer program instructions, and when the computer program instructions are executed by a processor, the processor implements the steps of the method as described above.

The functions described herein can be implemented in hardware, software executed by a processor, firmware, or any combination thereof. If implemented in the software executed by the processor, the functions can be stored as one or more instructions or code on a computer-readable medium or transmitted via a computer-readable medium. Other examples and embodiments are within the scope and spirit of the present application and the appended claims. For instance, due to the nature of software, the functions described above can be implemented in software executed by a processor, hardware, firmware, hard-wired circuitry, or any combination thereof. In addition, the functional units can be integrated into a single processing unit, or each unit can physically exist separately, or two or more units can be integrated into one unit.

It should be understood that, in the various embodiments provided in the present application, the disclosed technical content can be implemented in other ways. The apparatus embodiments described above are merely illustrative. For example, the division of units can represent a logical functional division, and in actual implementation, other division approaches can be employed, such as: a plurality of units or components can be combined or integrated into another system, or certain features can be omitted or not executed. Additionally, any coupling or direct coupling or communication connection shown or discussed can be an indirect coupling or communication connection through one or more interfaces, units, or modules, and can be in electrical or other forms.

The units described as separate components can or cannot be physically separate, and the components of the control device can or cannot constitute physical units, that is, they can be located in a single place or distributed across a plurality of units. Depending on actual needs, some or all of the units can be selected to achieve the objectives of the embodiments of the present application.

If the integrated unit is implemented as a software functional unit and sold or used as a standalone product, it can be stored on a computer-readable storage medium. Based on this understanding, the technical solution of the present application, or the part that contributes to the existing technology, or the whole or part of the technical solution can be embodied as a software product. This computer software product is stored in a storage medium and comprised several instructions that enable a computer device (which can be a personal computer, server, or network device, etc.) to execute all or part of the steps of the method in the various embodiments of the present application. The storage media described above comprise various media capable of storing computer program instructions, such as USB flash drives, read-only memory (ROM), random access memory (RAM), portable hard drives, magnetic disks, or optical disks.

The above is only exemplary embodiments of the present application and does not limit the scope of the present application. For those skilled in the art, the present application can have various modifications and variations. Any modifications, equivalent substitutions, improvements, etc. made within the spirit and principles of the present application shall be included within the scope of the claims of the present application.

## Claims

1. A motor cooling control method, comprising the following steps:
determining a target heat dissipation power according to a motor torque and a motor rotational speed;
determining a contour line corresponding to the target heat dissipation power according to a current oil-water temperature difference and the target heat dissipation power, wherein the contour line is configured to represent the target heat dissipation powers under different oil flow rates and different water flow rates;
determining an amount of change in the water flow rate corresponding to a current oil flow rate and an amount of change in the oil flow rate corresponding to a current water flow rate according to the contour line;
determining a target oil flow rate and a target water flow rate according to the smaller of the amount of change in the water flow rate and the amount of change in the oil flow rate; and
controlling a rotational speed or a duty ratio of an electronic oil pump according to the target oil flow rate, and controlling a rotational speed or a duty ratio of an electronic water pump according to the target water flow rate.

2. The motor cooling control method according to claim 1, wherein the step of determining a contour line corresponding to the target heat dissipation power according to a current oil-water temperature difference and the target heat dissipation power comprises:
determining a first distribution diagram corresponding to the current oil-water temperature difference, wherein the first distribution diagram is configured to represent heat dissipation powers under different oil flow rates and different water flow rates; and
performing interpolation between the heat dissipation powers in the first distribution diagram and the target heat dissipation power to obtain the contour line corresponding to the target heat dissipation power.

3. The motor cooling control method according to claim 2, wherein the step of determining a first distribution diagram corresponding to the current oil-water temperature difference comprises:
acquiring a second distribution diagram, wherein the second distribution diagram comprises a plurality of first distribution diagrams corresponding to preset oil-water temperature differences; and
when the current oil-water temperature difference is greater than a current preset oil-water temperature difference, determining the first distribution diagram corresponding to a next preset oil-water temperature difference as the first distribution diagram corresponding to the current oil-water temperature difference.

4. The motor cooling control method according to any one of claims 1 to 3, wherein the step of determining an amount of change in the water flow rate corresponding to a current oil flow rate and an amount of change in the oil flow rate corresponding to a current water flow rate according to the contour line comprises:
determining the water flow rate corresponding to the current oil flow rate and the oil flow rate corresponding to the current water flow rate according to the contour line;
determining the amount of change in the water flow rate as a difference between the water flow rate corresponding to the current oil flow rate and the current water flow rate; and
determining the amount of change in the oil flow rate as a difference between the oil flow rate corresponding to the current water flow rate and the current oil flow rate.

5. The motor cooling control method according to any one of claims 1 to 3, wherein the step of determining a target oil flow rate and a target water flow rate according to the smaller of the amount of change in the water flow rate and the amount of change in the oil flow rate comprises:
when the amount of change in the oil flow rate is less than or equal to the amount of change in the water flow rate, determining the current water flow rate as the target water flow rate, and determining a sum of the amount of change in the oil flow rate and the current oil flow rate as the target oil flow rate; and
when the amount of change in the oil flow rate is greater than the amount of change in the water flow rate, determining the current oil flow rate as the target oil flow rate, and determining a sum of the amount of change in the water flow rate and the current water flow rate as the target water flow rate.

6. The motor cooling control method according to any one of claims 1 to 3, wherein the step of determining a target heat dissipation power according to a motor torque and a motor rotational speed comprises:
looking up the target heat dissipation power in a preset mapping table according to the motor torque and the motor rotational speed, wherein the preset mapping table is configured to represent a correspondence between the motor torque, the motor rotational speed, and the target heat dissipation power.

7. The motor cooling control method according to any one of claims 1 to 3, wherein the step of controlling a rotational speed or a duty ratio of an electronic oil pump according to the target oil flow rate comprises:
determining a target rotational speed of the electronic oil pump according to the target oil flow rate and a displacement of the electronic oil pump, and controlling the electronic oil pump to operate at the target rotational speed; or
determining a target duty ratio of the electronic oil pump from a duty ratio-flow rate relationship table of the electronic oil pump according to the target oil flow rate, and controlling the electronic oil pump to operate at the target duty ratio.

8. A motor cooling control apparatus, comprising:
a target heat dissipation power determination unit, which is configured to determine a target heat dissipation power according to a motor torque and a motor rotational speed;
a contour line determination unit, which is configured to determine a contour line corresponding to the target heat dissipation power according to a current oil-water temperature difference and the target heat dissipation power, wherein the contour line is configured to represent the target heat dissipation powers under different oil flow rates and different water flow rates;
a flow rate change determination unit, which is configured to determine an amount of change in the water flow rate corresponding to a current oil flow rate and an amount of change in the oil flow rate corresponding to a current water flow rate according to the contour line;
a target flow rate determination unit, which is configured to determine a target oil flow rate and a target water flow rate according to the smaller of the amount of change in the water flow rate and the amount of change in the oil flow rate; and
a flow rate control unit, which is configured to control a rotational speed or a duty ratio of an electronic oil pump according to the target oil flow rate, and control a rotational speed or a duty ratio of an electronic water pump according to the target water flow rate.

9. A motor cooling control device, comprising a processor and a memory, wherein the memory stores computer program instructions executable by the processor, and when the processor executes the computer program instructions, the processor implements the steps of the method according to any one of claims 1 to 7.

10. A computer-readable storage medium, wherein the computer-readable storage medium stores computer program instructions, and when the computer program instructions are executed by a processor, the processor implements the steps of the method according to any one of claims 1 to 7.
